# EUROPEAN PATENT APPLICATION

(11) **EP 4 707 122 A1**
(43) Date of publication of application: **11.03.2026**
(21) Application number: 25199098.2
(22) Date of filing: 29.08.2025
(51) Int. Cl.: B62B 7/06, B62B 9/24

(54) **FOLDING DEVICE AND STROLLER**

(30) Priority: 30.08.2024 CN 202411220134
(71) Applicant: Wonderland Switzerland AG, 6312 Steinhausen (CH)
(72) Inventor: Wu, Haitao, Dongguan, Guangdong, 523648 (CN)
(74) Representative: Lucke, Andreas

(57) **Abstract**

A folding device (100) and a stroller (10) are provided. The folding device includes a pivot joint mechanism (14), a rotating base (120), and a locking assembly (150). The pivot joint mechanism is provided with a driving member (111) and is switchable between an unfolded state and a folded state. The rotating base is pivotally connected to the pivot joint mechanism. The rotating base is provided with a driven portion (121). The locking assembly is movably connected to the pivot joint mechanism or the rotating base. The locking assembly has a locking position and an unlocking position. When the pivot joint mechanism switches from the unfolded state to the folded state, the pivot joint mechanism drives the locking assembly to move from the locking position to the unlocking position, and when the locking assembly is in the unlocking position, the driving member drives the driven portion to move to cause the rotating base to rotate.

## Description

### TECHNICAL FIELD

The present application relates to the technical field of strollers, and in particular, to a folding device and a stroller.

### BACKGROUND

The stroller is a tool trolley designed to facilitate outdoor activities for infants and typically has a folding function to reduce its volume and enhance portability. In conventional strollers, a connecting assembly (such as an armrest and a food tray) is positioned in front of the infant's seating area for the infant to hold onto. During the folding process of existing strollers, the connecting assembly may not fold with the stroller frame, resulting in a less compact design after folding. Alternatively, users may need to disassemble the connecting assembly separately for storage.

### SUMMARY

In view of this, there is a need to provide a folding device and a stroller to solve the folding problem of the connecting assembly when the stroller is folded.

In an aspect, the present application provides a folding device including: a pivot joint mechanism provided with a driving member and switchable between an unfolded state and a folded state; a rotating base pivotally connected to the pivot j oint mechanism and configured to be connected to a connecting assembly, the rotating base being provided with a driven portion; and a locking assembly movably connected to at least one of the pivot joint mechanism and the rotating base, the locking assembly having a locking position in which the locking assembly restricts the rotating base and the pivot joint mechanism from rotating relative to each other and an unlocking position in which the locking assembly allows the rotating base and the pivot joint mechanism to rotate relative to each other. When the pivot joint mechanism switches from the unfolded state to the folded state, the pivot joint mechanism drives the locking assembly to move from the locking position to the unlocking position, and when the locking assembly is in the unlocking position, the driving member drives the driven portion to move to cause the rotating base to rotate relative to the pivot joint mechanism in a first rotating direction.

In an embodiment, a moving stroke of the driven portion is larger than that of the driving member.

In an embodiment, the pivot joint mechanism is provided with a first limiting groove. The driving member is slidable along the first limiting groove. The first limiting groove is configured to limit the moving stroke of the driving member.

In an embodiment, a side of the pivot joint mechanism facing the rotating base is provided with a second limiting groove. The driven portion is received in the second limiting groove and moves along the second limiting groove. A length of the second limiting groove is greater than that of the first limiting groove.

In an embodiment, both the driving member and the driven portion are received in the second limiting groove. The first limiting groove is provided in a wall surface of the second limiting groove.

In an embodiment, the driving member includes a first elastic member and a driving block. The driving block is located between the first elastic member and the driven portion. When the locking assembly is in the locking position, the driving block is connected to the driven portion, and an elastic force of the first elastic member provides the rotating base with a movement tendency to rotate in the first rotating direction.

In an embodiment, the pivot joint mechanism is provided with a first connecting base and a second connecting base which are pivotally connected to each other. The first connecting base is pivotally connected to the rotating base. A first limiting groove and a second limiting groove are provided on a side of the first connecting base facing the rotating base. The driving block is slidable along the first limiting groove. The first limiting groove is configured to limit the moving stroke of the driving member. One end of the first elastic member is connected to one end of the second limiting groove, and the other end of the first elastic member is connected to the driving block. The first elastic member, the driving block, and the driven portion are located in the second limiting groove.

In an embodiment, the first limiting groove is provided in a wall surface of the second limiting groove; and/or the first limiting groove and the second limiting groove are each in a circular arc shape.

In an embodiment, the pivot joint mechanism is provided with a first connecting base and a second connecting base which are pivotally connected to each other. The rotating base is connected to the first connecting base. The locking assembly is located between the first connecting base and the rotating base. In the process of the pivot joint mechanism switching from the unfolded state to the folded state, the pivot joint mechanism drives the locking assembly to move from the locking position to the unlocking position.

In an embodiment, the locking assembly includes a locking member and a moving member. In the process of the pivot joint mechanism switching from the unfolded state to the folded state, the pivot joint mechanism drives the moving member to move and the moving member drives the locking member to move from the locking position to the unlocking position.

In an embodiment, the first connecting base is provided with a first locking groove. The rotating base is provided with a second locking groove. When the locking member is in the locking position, a part of the locking member is located in the first locking groove, and another part of the locking member is located in the second locking groove. When the locking member is in the unlocking position, the locking member is located in either the first locking groove or the second locking groove.

In an embodiment, the moving member is located in the first locking groove and abuts against the second connecting base. In the process of the pivot joint mechanism switching from the unfolded state to the folded state, the second connecting base pushes the moving member to move towards the rotating base, and the moving member drives the locking member to move out of the first locking groove and move into the second locking groove.

In an embodiment, the first connecting base is provided with a perforation, the moving member is provided with an extended portion fitting into the perforation and extending towards the second connecting base. An end of the extended portion proximate to the second connecting base is provided with a first inclined surface. A side of the second connecting base facing the rotating base is provided with a second inclined surface. In the process of the pivot joint mechanism switching from the unfolded state to the folded state, the second connecting base pushes the moving member to move towards the rotating base through abutting fit between the second inclined surface and the first inclined surface.

In an embodiment, one of an inner wall of the first locking groove and the moving member is provided with a limiting rib, the other of the inner wall of the first locking groove and the moving member is provided with a recess, and the limiting rib and the recess are slidably fitted with each other.

In the folding device, by additionally providing the locking assembly having the locking position and the unlocking position, when the pivot joint mechanism switches from the unfolded state to the folded state, the locking assembly moves from the locking position to the unlocking position, so that the driving member can drive the driven portion to move to cause the rotating base to rotate unidirectionally relative to the pivot joint mechanism in the first rotating direction. That is, when the pivot joint mechanism 14 switches from the unfolded state to the folded state, the rotating base 120 can be driven to rotate unidirectionally to drive the connecting assembly to rotate to achieve further folding. Therefore, the folding device according to the present application has a simple overall structure, can automatically perform a further folding action, and improves the operational convenience.

In another aspect, the present application further provides a stroller. The stroller including: a foldable stroller frame, a pivot joint mechanism provided on the stroller frame and switchable between an unfolded state and a folded state; a rotating base pivotally connected to the pivot joint mechanism; a connecting assembly connected to the rotating base, at least a part of the connecting assembly defining a first plane; and a stroller frame locking mechanism connected to the stroller frame. The stroller frame locking mechanism is provided with an operating member. When the operating member is subjected to a force in a first direction, the pivot joint mechanism is driven to switch from the unfolded state to the folded state. In at least one stage of the switching process, the pivot joint mechanism drives the connecting assembly to rotate relative to the pivot joint mechanism in a first rotating direction, such that an angle formed between the first plane and the first direction is gradually increased.

In an embodiment, the process of the connecting assembly rotating in the first rotating direction includes a first stage and a second stage. In the first stage, the connecting assembly is driven by the driving member to rotate in the first rotating direction. In the second stage, the connecting assembly continues to rotate in the first rotating direction under an action of an external force.

In an embodiment, when the pivot joint mechanism is in the unfolded state, a height of the operating member is lower than that of the rotating base.

When the stroller as described above is folded, the connecting assembly can be driven to unidirectionally rotate in the first rotating direction, thereby avoiding a collision with the user's hand.

### BRIEF DESCRIPTION OF THE DRAWINGS

FIG. 1 is a schematic structural view of a stroller with a pivot joint mechanism in an unfolded state according to an embodiment of the present application.
FIG. 2 is a schematic structural view of the stroller with the pivot joint mechanism in a folded state according to an embodiment of the present application.
FIG. 3 is an exploded view of a folding device according to an embodiment of the present application.
FIG. 4 is a schematic structural view of a first connecting base of the folding device according to an embodiment of the present application.
FIG. 5 is a schematic structural view of a rotating base of the folding device according to an embodiment of the present application.
FIG. 6 is a schematic structural view of a moving member of the folding device according to an embodiment of the present application.
FIG. 7 is a schematic structural view of a second connecting base of the folding device according to an embodiment of the present application.
FIG. 8 is a sectional view of the folding device in a radial direction taken along the connecting base, with the folding device in an unfolded state.
FIG. 9 is a sectional view of the folding device in a radial direction taken along the connecting base, with the folding device in an folded state.

### Reference signs

10: stroller; 11: front leg frame; 12: rear leg frame; 13: handle frame; 14: pivot joint mechanism; 15: connecting assembly; 16: stroller frame locking mechanism; 161: operating member; 1610: lifting portion; 162: locking joint; 17: seat tube; 171: first hinge portion; 172: second hinge portion; 100: folding device; 110: first connecting base; 111: driving member; 1111: first elastic member; 1112: driving block; 112: first base body; 1121: body wall; 1122: first locking groove; 1123: second limiting groove; 1124: first ridge; 1125: second ridge; 1126: third ridge; 1127: first limiting groove; 1128: perforation; 1129: fourth ridge; 113: first connecting arm; 114: third base body; 115: limiting rib; 120: rotating base; 121: driven portion; 122: second locking groove; 130: second connecting base; 131: second base body; 1311: second inclined surface; 132: second connecting arm; 140: pivot shaft; 141: second elastic member; 150: locking assembly; 151: moving member; 1511: recess; 1512: extended portion; 15120: first inclined surface; 152: locking member; 160: pin.

### DETAILED DESCRIPTION

In descriptions of the present application, it should be understood that, directions or positional relationships indicated by terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" etc. are based on orientations or positional relationships shown in the accompanying drawings, and they are used only for describing the present application and for description simplicity, but do not indicate or imply that an indicated device or element must have a specific orientation or be constructed and operated in a specific orientation. Therefore, it cannot be understood as a limitation on the present application.

In the present application, unless specified or limited otherwise, the terms "mounted", "connected", "coupled", and "fixed" and the like are understood broadly. It may be, for example, fixed connections, detachable connections, or integral connections; may also be mechanical or electrical connections; may also be direct connections or indirect connections via intervening structures; may also be communication or an interaction relationship of two elements, unless otherwise specified. The above terms can be understood by those skilled in the art according to specific situations.

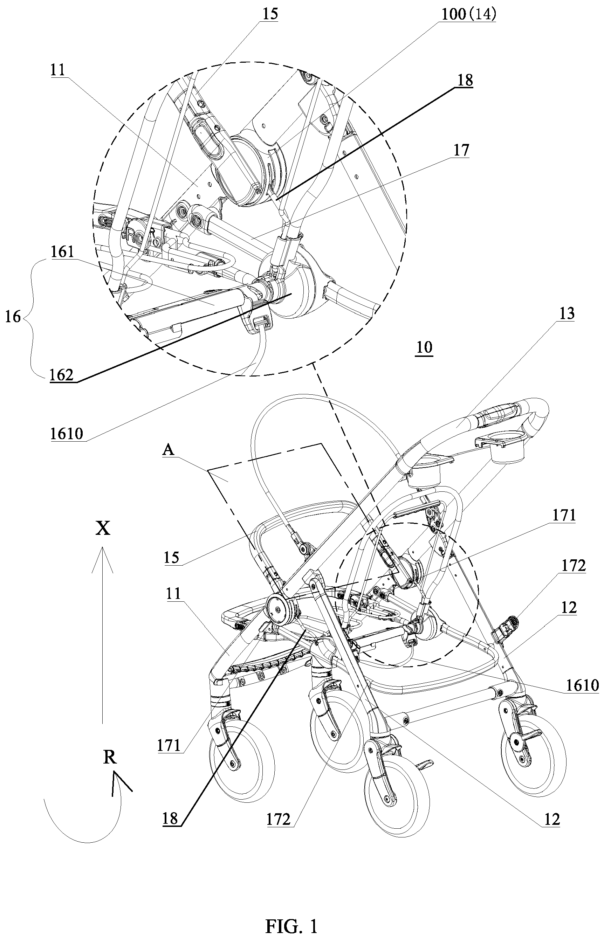

Referring to FIG. 1 to FIG. 9, the present application provides a folding device 100. The folding device 100 includes a pivot joint mechanism 14, a rotating base 120, and a locking assembly 150. The pivot joint mechanism 14 is provided with a driving member 111. The pivot joint mechanism 14 has an unfolded state and a folded state, and is switchable between the two states. The rotating base 120 is pivotally connected to the pivot joint mechanism 14, and is provided with a driven portion 121. The locking assembly 150 is movably connected to at least one of the pivot joint mechanism 14 and the rotating base 120. The locking assembly 150 has a locking position and an unlocking position. When the locking assembly 150 is in the locking position, the locking assembly 150 can restrict the relative rotation between the rotating base 120 and the pivot joint mechanism 14. When the locking assembly 150 is in the unlocking position, the locking assembly 150 allows the relative rotation between the rotating base 120 and the pivot joint mechanism 14. When the pivot joint mechanism 14 switches from the unfolded state to the folded state, the pivot joint mechanism 14 drives the locking assembly 150 to move from the locking position to the unlocking position, and when the locking assembly 150 is in the unlocking position, the driving member 111 drives the driven portion 121 to move to cause the rotating base 120 to rotate relative to the pivot joint mechanism 14 in a first rotating direction R.

In the folding device 100 provided according to the present application, by additionally providing the locking assembly 150 having the locking position and the unlocking position, when the pivot joint mechanism 14 switches from the unfolded state to the folded state, the locking assembly 150 moves from the locking position to the unlocking position, so that the driving member 111 can drive the driven portion 121 to move to cause the rotating base 120 to rotate unidirectionally relative to the pivot joint mechanism 14 in the first rotating direction R. That is, when the pivot joint mechanism 14 switches from the unfolded state to the folded state, the rotating base 120 can be driven to rotate unidirectionally to achieve further folding. Therefore, the folding device 100 according to the present application has a simple overall structure, can automatically perform a further folding action, and improves the operational convenience.

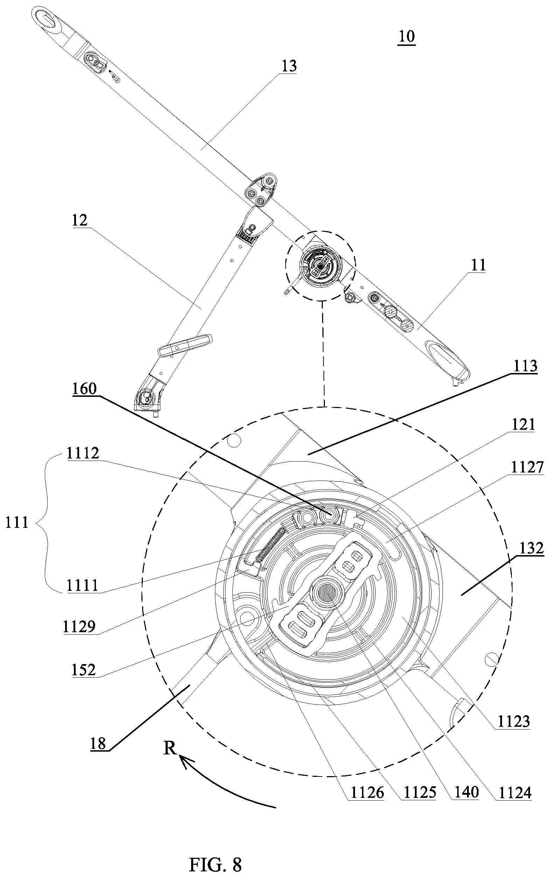

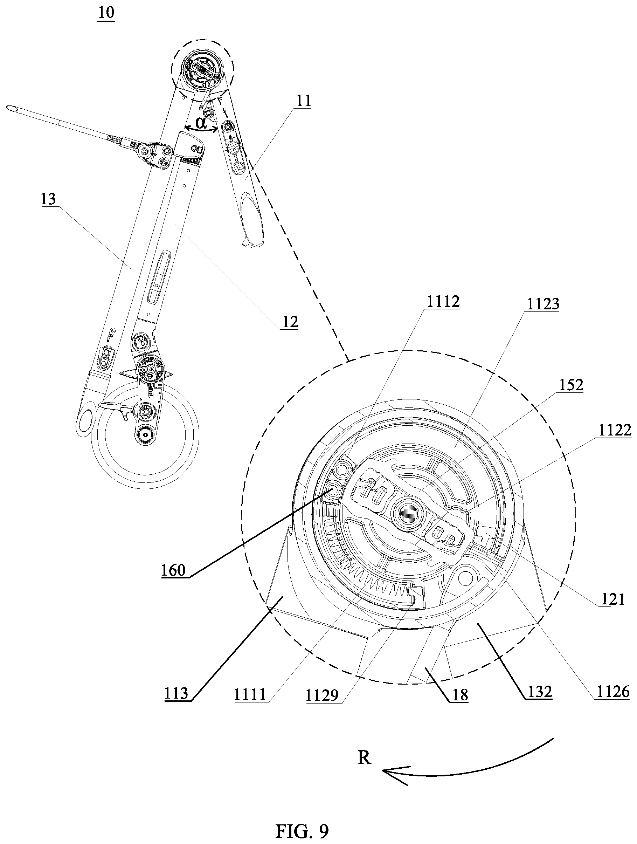

Referring to FIG. 8 and FIG. 9, in the following embodiments, the first rotating direction R is defined as a clockwise direction in FIG. 8 and FIG. 9. Certainly, in other embodiments, the first rotating direction may be a counter-clockwise direction.

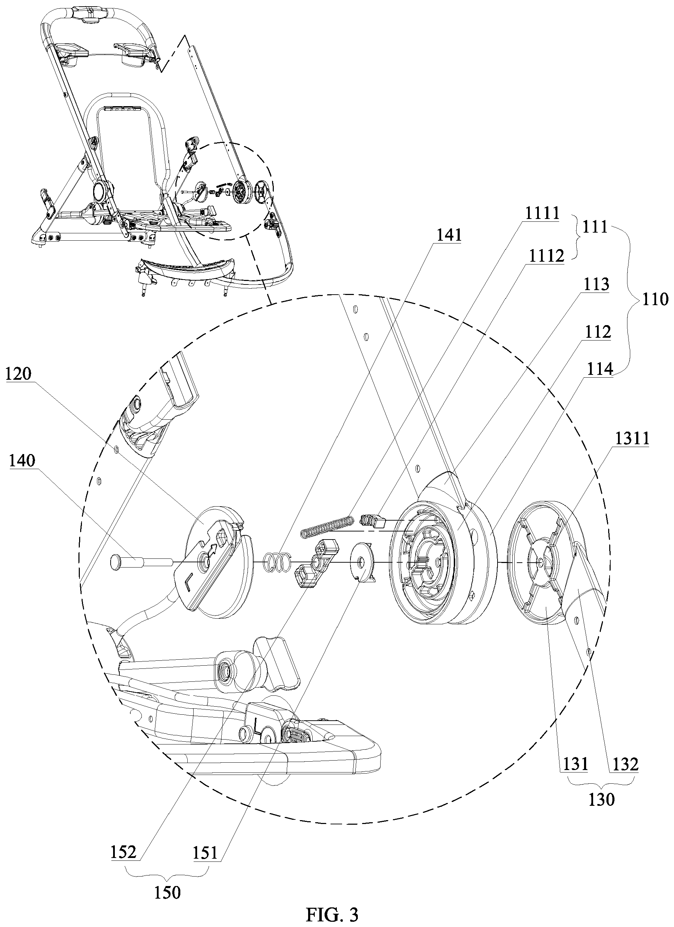

In the illustrated embodiment, referring to FIG. 3, specifically, the pivot joint mechanism 14 includes a first connecting base 110 and a second connecting base 130. The first connecting base 110 and the second connecting base 130 are pivotally connected to each other. When the first connecting base 110 and the second connecting base 130 rotate relative to each other, the pivot joint mechanism 14 can switch between the unfolded state and the folded state. The first connecting base 110 and the second connecting base 130 are arranged coaxially with the rotating base 120. The first connecting base 110, the second connecting base 130, and the rotating base 120 are provided with through holes (not shown), respectively. A pivot shaft 140 extends through these through holes to make any one of the first connecting base 110, the second connecting base 130, and the rotating base 120 pivotable relative to the other two.

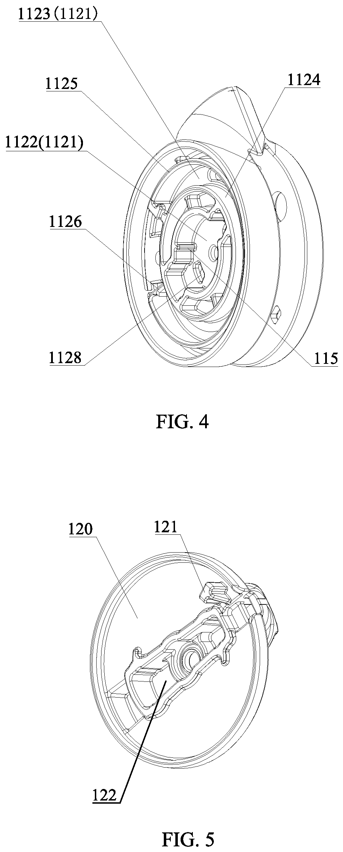

Referring to FIG. 3 and FIG. 4, the first connecting base 110 can be approximately regarded as including a first base body 112 with a disk shape and a first connecting arm 113 connected to an outer circumferential surface of the first base body 112. In a length direction of the pivot shaft 140, that is, in a thickness direction of the first base body 112, one end of the first base body 112 is provided with a circular opening, and the other end of the first base body 112 is a body wall 1121 of the first base body 112.

Similar to the first connecting base 110, the second connecting base 130 can also be approximately regarded as including a second base body 131 with a disk shape and a second connecting arm 132 connected to an outer circumferential surface of the second base body 131. The second base body 131 is located at an end of the first base body 112 facing away from the rotating base 120, i.e., an end where the body wall 1121 of the first base body 112 is located. In the illustrated embodiment, the first connecting base 110 further includes a third base body 114. The third base body 114 and the first base body 112 are spaced apart to form a slot, and the second base body 131 is embedded in the slot.

Referring to FIG. 3 and FIG. 5, the rotating base 120 is approximately in a disk shape. The rotating base 120 covers the circular opening of the first base body 112, i.e., the rotating base 120 covers a side of the first base body 112 facing away from the third base body 114. The driven portion 121 is provided on a side of the rotating base 120 facing the third base body 114. The driven portion 121 protrudes from a surface of the rotating base 120 facing the second connecting base 130 into the first base body 112.

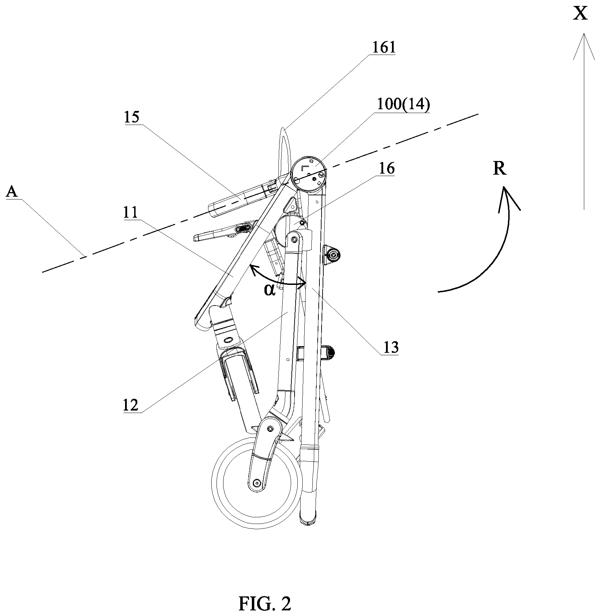

For convenience of understanding, the following description is given with the folding device 100 applied to a stroller 10 shown in FIG. 1 and FIG. 2. Specifically, the stroller 10 has a front leg frame 11, two rear leg frames 12, a handle frame 13, and a connecting assembly 15. Two folding devices 100 are symmetrically arranged at two sides of the stroller 10. The front leg frame 11 is U-shaped, with its two ends each fixedly connected to a corresponding one of the second connecting arms 132. The handle frame 13 is also U-shaped, with its two ends each fixedly connected to a corresponding one of the first connecting arms 113. The two rear leg frames 12 are hinged to the handle frame 13. The connecting assembly 15 is U-shaped, with its two ends each fixedly connected to a corresponding one of the rotating bases 120. The front leg frame 11 is connected with two wheels. The two rear leg frames 12 are each connected to one wheel. When the stroller 10 is folded via the folding device 100, the first connecting base 110 and the second connecting base 120 rotate relative to each other to reduce an angle between the front leg frame 11 and the handle frame 13 to achieve folding. During the folding process, the driving member 111 drives the rotating base 120 to rotate via the driven portion 121, allowing the connecting assembly 15 to rotate along with the rotating base 120 and automatically complete the folding.

Taking the stroller frame of the stroller 10 shown in FIG. 8 as an example, it should be understood that in this case, the folding device 100 is in the unfolded state, with the front leg frame 11 and the handle frame 13 approximately located on the same straight line. Taking the stroller frame of the stroller 10 shown in FIG. 2 and FIG. 9 as an example, in this case, the folding device 100 is in the folded state, where the front leg frame 11 and the handle frame 13 form an angle α which is an acute angle and opens downward.

Referring to FIG. 3, FIG. 8, and FIG. 9, the locking assembly 150 is provided between the first base body 112 and the rotating base 120. In an exemplary embodiment, the locking assembly 150 has a locking position and an unlocking position. When the first connecting base 110 and the second connecting base 130 rotate relative to each other, the locking assembly 150 can be driven to move and switch between the locking position and the unlocking position. In the process of the pivot joint mechanism 14 switching from the unfolded state to the folded state, the locking assembly 150 moves from the locking position to the unlocking position, so that the driving member 111 can drive the driven portion 121 to move, thereby allowing the rotating base 120 to rotate relative to the first connecting base 110 in the first rotating direction R. In this way, the rotation of the rotating base 120 relative to the first connecting base 110 in the first rotating direction R can be automatically triggered in the process of the pivot joint mechanism 14 switching from the unfolded state to the folded state, thereby improving the folding efficiency.

Further, the locking assembly 150 includes a moving member 151 and a locking member 152. In the illustrated embodiment, the locking member 152 is approximately in an elongated shape, the moving member 151 is approximately in a circular sheet shape, and the moving member 151 is connected to the locking member 152. In the process of the pivot joint mechanism 14 switching from the unfolded state to the folded state, the moving member 151 is driven by the pivot joint mechanism 14 to force the locking member 152 to move from the locking position to the unlocking position. Certainly, in other embodiments, the moving member 151 and the locking member 152 may have other shapes such as a cylindrical shape and a prismatic shape, which is not limited in the present application.

Still further, the first connecting base 110 is provided with a first locking groove 1122, and the rotating base 120 is provided with a second locking groove 122. Referring to FIG. 4 and FIG. 8, exemplarily, the first connecting base 110 is provided therein a plurality of ridges protruding from the body wall 1121 of the first base body 112 towards the rotating base 120. Specifically, the first connecting base 110 is provided with a first ridge 1124 in a closed annular shape and a second ridge 1125 in a circular arc shape. The second ridge 1125 has a diameter larger than that of the first ridge 1124. More specifically, the first locking groove 1122 is located in a region enclosed by the first ridge 1124, and part of the first locking groove 1122 is shape-matched with the locking member 152, such that both ends of the locking member 152 in a length direction thereof can be embedded in the first locking groove 1122. Referring to FIG. 5, the second locking groove 122 is formed at a side of the rotating base 120 facing the first connecting base 110, and the second locking groove 122 is also shape-matched with the locking member 152, such that the locking member 152 can also be embedded in the second locking groove 122.

In the illustrated embodiment, the locking position refers to a position of the locking assembly 150 where at least part of the locking member 152 is located in the first locking groove 1122. It should be understood that when the pivot joint mechanism 14 is in the unfolded state, the locking member 152 is in the locking position, and in this case, since part of the locking member 152 is located in the first locking groove 1122 and another part of the locking member 152 is located in the second locking groove 122, the rotating base 120 is not allowed to rotate relative to the first connecting base 110.

In the illustrated embodiment, the unlocking position refers to a position of the locking assembly 150 where the locking member 152 has completely left the second locking groove 122 and entered the first locking groove 1122 after moving from the locking position towards the rotating base 120. It should be understood that when the pivot joint mechanism 14 is in the folded state, the locking member 152 is in the unlocking position, and in this case, since the locking member 152 is located in the second locking groove 122 and not in the first locking groove 1122, the locking member 152 can rotate with the rotating base 120 relative to the first connecting base 110.

It should be noted that in the process of the folding device 100 switching from the unfolded state to the folded state, the locking member 152 is required to move a certain distance to completely enter the second locking groove 122, and therefore, during this movement of the locking member 152, the locking member 152 can be regarded as being in the locking position.

It should also be noted that in other embodiments of the present application, the locking member 152 may move away from the rotating base 120 until the locking member completely leaves the second locking groove 122 and enters the first locking groove 1122 to reach the unlocking position. Therefore, in these embodiments, the locking member 152 is in the unlocking position when the locking member 152 has completely left the second locking groove 122 and entered the first locking groove 1122.

In some embodiments, the moving member 151 is located in the first locking groove 1122 and abuts against the second connecting base 130. Referring to FIG. 3, FIG. 4, and FIG. 7 to FIG. 9, the locking member 152 is connected to the moving member 151, and this connection may involve bonding, welding, abutting, or similar methods, which is not limited in this application. Specifically, the body wall 1121 of the first base body 112 is provided with a perforation 1128, the moving member 151 is provided with an extended portion 1512, and when the folding device 100 is located in the locking position, the extended portion 1512 extends through the perforation 1128 and abuts against the second base body 131. When the pivot joint mechanism 14 switches from the unfolded state to the folded state, the second base body 131 rotates relative to the first base body 112 in the first rotating direction R, and the moving member 151 is pushed by the second base body 131 to move in a direction parallel to an axial direction of the pivot shaft 140 and gradually approach the rotating base 120, thereby driving the locking member 152 to completely enter the second locking groove 122, i.e., causing the locking member 152 to move from the locking position to the unlocking position, which releases the locked state between the rotating base 120 and the first base body 112, and allows the rotating base 120 to pivot relative to the first connecting base 110.

Further, referring to FIG. 3, FIG. 6 and FIG. 7, an end of the extended portion 1512 proximate to the second connecting base 130 is provided with a first inclined surface 15120, and a side of the second connecting base 130 facing the rotating base 120 is provided with a second inclined surface 1311. In an exemplary embodiment, the second connecting base 130 is provided with two second inclined surfaces 1311. Each of the second inclined surfaces 1311 is inclined away from the rotating base 120 in the first rotating direction R. A number of the first inclined surfaces 15120 is equal to that of the second inclined surfaces 1311, and each of the first inclined surfaces 15120 substantially fits one of the second inclined surfaces 1311, so as to increase a contact area between the extended portion 1512 and the second connecting base 130. In the process of the pivot joint mechanism 14 switching from the unfolded state to the folded state, when the second connecting base 130 rotates relative to the first connecting base 110 in the first rotating direction, an abutting position of the extended portion 1512 against the second inclined surface 1311 gradually shifts from a side of the second inclined surface 1311 farther away from the rotating base 120 to a side of the second inclined surface 1311 closer to the rotating base 120, so that the moving member 151 moves towards the rotating base 120 to drive the locking member 152 to completely enter the second locking groove 122, causing the locking member 152 to move from the locking position to the unlocking position.

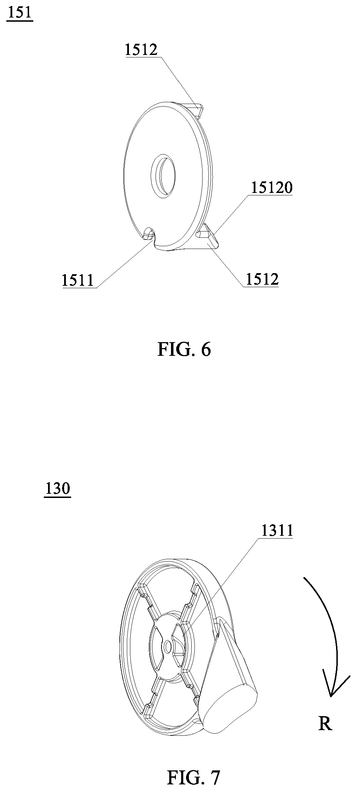

In some embodiments, one of an inner wall of the first locking groove 1122 and the moving member 151 is provided with a limiting rib 115, the other is provided with a recess 1511, and the limiting rib 115 and the recess 1511 are slidably fitted. Exemplarily, the moving member 151 is provided with the recess 1511, the first connecting base 110 is provided with the limiting rib 115, and the limiting rib 115 cooperates with the recess 1511 to limit a moving direction of the moving member 151. Exemplarily, referring to FIG. 4 and FIG. 6, the limiting rib 115 is provided in the first locking groove 1122, and a length direction of the limiting rib 115 is parallel to the axial direction of the pivot shaft 140. The recess 1511 is formed on an outer circumferential side of the moving member 151, and the recess 1511 is configured to receive the limiting rib 115 such that the moving member 151 can move in the length direction of the limiting rib 115. By providing the recess 1511 in the moving member 151 and having the recess 1511 cooperate with the limiting rib 115 on the first connecting base 110, the movement direction of the moving member 151 is constrained such that the moving member 151 can only move parallel to the axial direction of the pivot shaft 140, which prevents the extended portion 1512 from failing to extend into the perforation 1128 due to any unintended rotation of the moving member 151, thereby ensuring that the first inclined surface 15120 and the second inclined surface 1311 can properly align.

Certainly, in some other embodiments, the limiting rib 115 may be provided on the moving member 151, and the recess may be formed in the inner wall of the first locking groove 1122. This can also achieve the function of constraining the moving direction of the moving member 151 such that the moving member can only move in the length direction parallel to the pivot shaft 140.

On the other hand, in some embodiments, a moving stroke of the driven portion 121 is larger than that of the driving member 111. Referring to FIG. 8 and FIG. 9, in an exemplary embodiment, when the pivot joint mechanism 14 switches from the unfolded state to the folded state, the rotating base 120 rotates in the first rotating direction R relative to the pivot joint mechanism 14. During this process, the driven portion 121 is initially driven by the driving member 111 to rotate in the first rotating direction R, and once the driving member 111 rotates to reach its maximum moving stroke in the first rotating direction R, the driven portion 121, due to having greater moving stroke than that of the driving member 111, is no longer driven by the driving member 111, but continues to rotate in the first rotating direction R under an action of an external force. The external force may be gravity or a pushing force actively applied by a user using a hand or other tools, which is not limited in the present application.

In some embodiments, the pivot joint mechanism 14 is provided with a second limiting groove 1123. The second limiting groove 1123 is located on a side of the pivot joint mechanism 14 facing the rotating base 120. Referring to FIG. 4, FIG. 8 and FIG. 9, exemplarily, the second limiting groove 1123 is formed in the first base body 112. Specifically, the first ridge 1124, the second ridge 1125, and the body wall 1121 of the first base body 112 define the second limiting groove 1123 in an arched shape. The driving member 111 is located in the second limiting groove 1123. The driven portion 121 extends into the second limiting groove 1123. In the process of the pivot joint mechanism 14 switching from the unfolded state to the folded state, the driven portion 121 can be driven by the driving member 111 to move to cause the rotating base 120 to rotate in the first rotating direction R relative to the first connecting base 110. During this process, the second limiting groove 1123 guides the driven portion 121 to move in a circular arc direction to ensure that the rotating base 120 and the first connecting base 110 are kept coaxially arranged during pivoting of the rotating base 120 relative to the first connecting base 110. The first base body 112 is further provided therein with a third ridge 1126. The third ridge 1126 forms one end of the second limiting groove 1123. Once the driven portion 121 moves in the second limiting groove 1123 to abut against the third ridge 1126, the rotating base 120 is prevented from rotating further. Consequently, the second limiting groove 1123 constraints a rotation angle of the rotating base 120 relative to the first connecting base 110, thereby preventing excessive rotation of the rotating base 120 relative to the first connecting base 110, which could lead to excessive folding of the folding device 100.

In some embodiments, the pivot joint mechanism 14 is provided with a first limiting groove 1127. The driving member 111 is slidable along the first limiting groove 1127. The first limiting groove 1127 is configured to limit the moving stroke of the driving member 111. More specifically, the first limiting groove 1127 is located on a side of the pivot joint mechanism 14 facing the rotating base 120, and the first connecting base 110 in the illustrated embodiment is provided with the first limiting groove 1127. Referring to FIG. 8 and FIG. 9, the first limiting groove 1127 is provided in the body wall 1121 of the first base body 112 and located in a region of the body wall 1121 of the first base body 112 corresponding to the second limiting groove 1123. The first limiting groove 1127 is in a circular arc shape. The driving member 111 may be positioned at a side of the first limiting groove 1127 facing the rotating base 120. The folding device 100 is further provided with a pin 160. The pin 160 extends through the driving member 111 into the first limiting groove 1127 in the direction parallel to the axial direction of the pivot shaft 140, and can slide within the first limiting groove 1127 in the extension direction of the first limiting groove 1127, so that the driving member 111 can slide in the extension direction of the first limiting groove 1127. A length of the first limiting groove 1127 in a circular arc direction is a maximum moving stroke of the pin 160, and thus of the driving member 111.

Certainly, the first limiting groove 1127 and the second limiting groove 1123 may be in other shapes than the arc shape, and the shapes of the first limiting groove 1127 and the second limiting groove 1123 are not limited in the present application.

In some embodiments, both the driving member 111 and the driven portion 121 are received in the second limiting groove 1123, and the first limiting groove 1127 is provided in a wall surface of the second limiting groove 1123. In an exemplary embodiment, a part of a surface of the body wall 1121 facing the rotating base 120 forms a bottom wall surface of the second limiting groove 1123, and side surfaces of the first ridge 1124 and the second ridge 1125 facing to each other form two side wall surfaces of the second limiting groove 1123. The first limiting groove 1127 is provided in the body wall 1121, that is, the first limiting groove 1127 is in communication with the second limiting groove 1123 at the bottom wall of the second limiting groove 1123. Moreover, the first limiting groove 1127 is provided in the bottom wall surface of the second limiting groove 1123, and the pin 160 extends into the first limiting groove 1127 through the second limiting groove 1123. In this way, the moving stroke of the driving member 111 can be limited due to the cooperation between the pin 160 and the first limiting groove 1127 without additionally providing other connecting structures with complicated shapes, which is conductive to reducing the structural complexity of the pivot joint mechanism 14. In some other embodiments, the first limiting groove 1127 may be provided on the first ridge 1124 and/or the second ridge 1125, that is, the first limiting groove 1127 and the second limiting groove 1123 are in communication at the side wall of the second limiting groove 1123.

In addition, in some other embodiments, the second limiting groove 1123 may have only two wall surfaces. For example, when the second limiting groove 1123 is a V-shaped groove, the two wall surfaces of the second limiting groove 1123 are joined to form an angle therebetween. In addition, the second limiting groove 1123 may have only one wall surface. For example, the side wall and the bottom wall of the second limiting groove 1123 are smoothly joined to form an arc-shaped wall surface. Certainly, the second limiting groove 1123 may have four or more wall surfaces. In these embodiments, the first limiting groove 1127 may be in communication with the second limiting groove 1123 at one wall or a plurality of walls, which is not limited in the present application.

In some embodiments, the driving member 111 includes a first elastic member 1111 and a driving block 1112. The driving block is located between the first elastic member 1111 and the driven portion 121. Specifically, the first elastic member 1111 is connected to the driving block 1112, and the driving block 1112 can abut against the driven portion 121. More specifically, one end of the first elastic member 1111 is connected to one end of the second limiting groove 1123, and the other end of the first elastic member 1111 is connected to the driving block 1112. The pin 160 extends through the driving block 1112 into the first limiting groove 1127 in the direction parallel to the axial direction of the pivot shaft 140, and can slide within the first limiting groove 1127 in the extension direction of the first limiting groove 1127, so that the driving block 1112 can slide in the extension direction of the first limiting groove 1127. Referring to FIG. 8 and FIG. 9, both the first elastic member 1111 and the driving block 1112 are located in the second limiting groove 1123. A fourth ridge 1129 is provided in the first base body 112. The fourth ridge 1129 forms a head end of the second limiting groove 1123. The first elastic member 1111 is a spring. One end of the spring is connected to the fourth ridge 1129, and the other end of the spring is connected to the driving block 1112. The driven portion 121 extends into the first base body 112 and can abut against the driving block 1112. A part of the driven portion 121 is located in the second limiting groove 1123. It should be understood that when the locking assembly 150 is in the locking position, the driving block 1112 is attached to (e.g., abuts against) the driven portion 121, and an elastic force of the first elastic member 1111 provides the rotating base 120 with a movement trend of rotating in the first rotating direction. More specifically, when the locking assembly 150 is in the locking position, the first elastic member 1111 is in a compressed state, and the driving block 1112 always has a trend of moving towards a tail end of the first limiting groove 1127, i.e., a trend of rotating in the first rotating direction. Since the driving block 1112 abuts against the driven portion 121, the rotating base 120 also always has a trend of pivoting relative to the first connecting base 110. By providing the first elastic member 1111 and the driving block 1112, when the folding device 100 is to be folded, the first elastic member 1111 can drive the rotating base 120 to pivot more quickly, so that a time required for folding is shortened, and meanwhile, the folding of the folding device 100 is more labor-saving. In some other embodiments, the first elastic member 1111 may be an elastic member such as a rubber band, which is not limited in the present application.

It should be noted that, in some embodiments, the pin 160 may not be provided in the folding device 100. For example, two hook-shaped engagement elastic arms are extended from and formed on a side of the driving block 1112 proximate to the first limiting groove 1127. The engagement elastic arms may pass through the first limiting groove 1127 under elastic deformation and subsequently engage with a back side of the first limiting groove 1127, so that the driving block 1122 cannot be removed from the first limiting groove 1127, and the driving block 1122 can slide in the extension direction of the first limiting groove 1127.

In some embodiments, the folding device 100 further includes a second elastic member 141. Referring to FIG. 3, exemplarily, the second elastic member 141 is also a spring. The second elastic member 141 is provided between the rotating base 120 and the locking member 152, and both ends of the second elastic member 141 are connected to the rotating base 120 and the locking member 152, respectively. It should be understood that, when the pivot joint mechanism 14 switches from the unfolded state to the folded state, as the locking member 152 moves towards the rotating base 120 in the length direction of the pivot shaft 140, the second elastic member 141 is compressed, and the first locking groove 1122 and the second locking groove 122 are misaligned with each other due to the rotation of the first connecting base 110 and the second connecting base 130, so that the locking member 152 is unable to return to the first locking groove 1122, and the second elastic member 141 is maintained in the compressed state and exerts a force onto the locking member 152 in a direction away from the rotating base 120, providing the locking member 152 with a tendency to move away from the rotating base 120. When the locking member 152 is completely positioned in the second locking groove 122, as the pivot joint mechanism 14 switches from the folded state to the unfolded state, the first locking groove 1122 and the second locking groove 122 are realigned with each other, and the second elastic member 141 exerts a pushing force onto the locking member 152 towards the first locking groove 1122, which provides the locking member 152 with a tendency to move back into the first locking groove 1122, allowing the locking member 152 to automatically reset from the unlocking position to the locking position.

Referring to FIG. 8, when the locking member 152 is positioned in both the first locking groove 1122 and the second locking groove 122, the rotating base 120 is prevented from rotating relative to the first connecting base 110.

Taking the folding device 100 shown in FIG. 8 as an example, when the folding device 100 is to be folded, the second connecting base 130 is rotated clockwise relative to the first connecting base 110 to drive the locking member 152 to completely enter the second locking groove 122. Once the locking member 152 has completely entered the second locking groove 122, the rotating base 120 can be rotated relative to the first connecting base 110, and the locking member 152 is rotated with the rotating base 120, causing the locking member 152 to be misaligned with the first locking groove 1122. In this case, the rotating base 120 can be rotated in the first rotating direction relative to the first connecting base 110 until the driven portion 121 abuts against the third ridge 1126, and a position relationship between the locking member 152 and the first locking groove 1122 at this point is shown in FIG. 9.

Taking the folding device 100 shown in FIG. 9 as an example, when the folding device 100 is to be unfolded, the second connecting base 120 is rotated counterclockwise relative to the first connecting base 110 until the extended portion 1512 faces the second inclined surface 1311. In this case, the rotating base 120 is rotated counterclockwise relative to the first connecting base 110, and once the first locking groove 1122 of the first connecting base 110 is aligned with the second locking groove 122 of the rotating base 120, the locking member 152 is driven by the second elastic member 141 to enter the first locking groove 1122 again, so that the rotating base 120 is blocked by the locking member 152 from rotating relative to the first base body 112, and the rotating base 120 is locked again.

In another aspect, referring to FIG. 1 and FIG. 2, the present application further provides a stroller 10. The stroller 10 includes a stroller frame, a pivot joint mechanism 14, a rotating base 120, a connecting assembly 15, and a stroller frame locking mechanism 16. The pivot joint mechanism 14 is provided on the stroller frame and has an unfolded state and a folded state. The rotating base 120 is pivotally connected to the pivot joint mechanism 14. The connecting assembly 15 is connected to the rotating base 120. At least a part of the connecting assembly 15 forms a first plane A. The stroller frame locking mechanism 16 is connected to the stroller frame. When an operating member 161 of the stroller frame locking mechanism 16 is subjected to a force in a first direction X, the pivot joint mechanism 14 is driven to switch from the unfolded state to the folded state. In at least one stage of the switching process, the pivot joint mechanism 14 drives the connecting assembly 15 to move relative to the pivot joint mechanism 14 in a first rotating direction R, so that an angle formed by the first plane A and the first direction gradually increases.

Specifically, the pivot joint mechanism 14 includes the first connecting base 110 and the second connecting base 130 of the foregoing folding device 100. The stroller frame includes a front leg frame 11, a rear leg frame 12, a handle frame 13, a seat tube 17, and a linkage tube 18. The seat tube 17 is U-shaped. The seat tube 17 is provided with two first hinge portions 171 and two second hinge portions 172. The two first hinge portions 171 are respectively located at two ends of the seat tube 17. The seat tube 17 is hinged to two ends of the front leg frame 11 respectively through the two first hinge portions 171. The two second hinge portions 172 are arranged opposite to each other. The seat tube 17 is hinged to the rear leg frames 12 at both sides respectively through the two second hinge portions 172. The stroller frame locking mechanism 16 includes an operating member 161 and two locking joints 162. The two locking joints 162 are provided at both ends of the operating member 161, respectively. The two locking joints 162 are each slidably connected to the seat tube 17. The locking joint 162 is hinged to the first base body 112 through the linkage tube 18.

The two locking joints 162 and the seat tube 17 can be locked to or unlocked from each other. For example, the locking joint 162 is provided with a locking pin (not shown), and the seat tube 17 is provided with a plurality of locking holes (not shown). When the locking pin is engaged with the locking hole, the locking joint 162 and the seat tube 17 are locked to each other, and the stroller frame locking mechanism 16 is prevented from sliding in an extension direction of the seat tube 17. When the locking pin is disengaged from the locking hole, the locking joint 162 and the seat tube 17 are unlocked from each other, and the stroller frame locking mechanism 16 is allowed to slide in the extension direction of the seat tube 17.

It should be noted that two ends of the linkage tube 18 are hinged to the first connecting base 110 and the locking joint 162, respectively. It can be understood that when the pivot joint mechanism 14 switches between the unfolded state and the folded state, the locking joint 162 of the stroller frame locking mechanism 16 adaptively slides in the extension direction of the seat tube 17, so that the locking joint 162 drives the first connecting base 110 to rotate via the linkage tube 18, allowing an angle between a plane where the seat tube 17 is located and a plane where the front leg frame 11 is located to be adaptively adjusted, and allowing an angle between the plane where the seat tube 17 is located and a plane where the two rear leg frames 12 are located to be also adaptively adjusted.

The connecting assembly 15 may be an armrest, a food tray, or other components connected to and cooperatively used with the stroller frame. In the illustrated embodiment, the connecting assembly 15 is approximately U-shaped, and each of two ends of the connecting assembly is connected to one rotating base 120. In the illustrated, the connecting assembly 15 is detachably connected to the rotating bases 120. Specifically, a side of the rotating base 120 facing away from the first connecting base 110 is provided with an engagement portion configured to engage with an engagement structure of the connecting assembly 15. In other embodiments, the connecting assembly 15 and the rotating base 120 may be fixedly connected to each other.

Referring to FIG. 1 and FIG. 2, a plane where the connecting assembly 15 is located is the first plane A. In other embodiments, the entire structure of the connecting assembly 15 may not be in the same plane, but at least a part of the structure of the connecting assembly 15 is in the first plane A.

Referring to FIG. 1, When there is no force applied to the operating member 161, the stroller frame locking mechanism 16 is locked to the seat tube 17, and the locking joint 162 is prevented from sliding in a length direction of the seat tube 17. When the operating member 161 is subjected to a rotating force to, the locking joint 162 of the stroller frame locking mechanism 16 is unlocked from the seat tube 17, so that the locking joint 162 is allowed to slide in the length direction of the seat tube 17. The operating member 161 is provided with a lifting portion 1610. When the lifting portion 1610 is pulled in the first direction X, the operating member 161 is subjected to the rotating force to unlock the stroller frame locking mechanism 16 from the seat tube 17. Specific implementation processes of the unlocking and locking of the stroller frame locking mechanism 16 can be referred to prior art and will not be described in detail herein. In the illustrated embodiment, the first direction X is a vertically upward direction, and in this case, an operator can pull the lifting portion 1610 with less effort, but certainly, the first direction X may be an obliquely upward direction, that is, an angle between the first direction and the vertically upward direction is an acute angle.

FIG. 1 is a schematic view showing the pivot joint mechanism 14 in an unfolded state, and correspondingly, the stroller 10 in an unfolded state, with the angle formed between the first plane A and the first direction X being an acute angle. FIG. 2 is a schematic view showing the pivot joint mechanism 14 in a folded state, and correspondingly, the stroller 10 in a folded state, with the angle formed between the first plane A and the first direction X being an obtuse angle. It should be understood that in the process of the stroller 10 switching from the unfolded state shown in FIG. 1 to the folded state shown in FIG. 2, the connecting assembly 15 is driven by the first elastic member 1111 to rotate in the first rotating direction R, that is, to rotate counterclockwise as shown in FIG. 1 (or may be referred to as rotating downwards towards the front of the stroller), so that the angle formed between the first plane A and the first direction X gradually increases. The lifting portion 1610 may be a woven tape, a hose, or the like, which is not limited in the present application.

It should be noted that, referring to FIG. 8 and FIG. 9, the process of the connecting assembly 15 rotating in the first rotating direction R (counterclockwise as shown in FIG. 1) includes a first stage and a second stage. In the first stage, the first elastic member 1111 drives the driving member 111 to move to a maximum stroke limited by the second limiting groove 1123, during which the rotating base 120 is driven by the driving member 111 to rotate a certain stroke in the first rotating direction R, so that the connecting assembly 15 is driven to rotate unidirectionally. Subsequently, the process of the connecting assembly 15 rotating in the first rotating direction R enters the second stage, in which the connecting assembly 15 continues to rotate in the first rotating direction R under the action of an external force, thereby not interfering with the first direction X. In the second stage, even though the first elastic member 1111 is unable to continue to drive the driven portion 121 to move via the driving member 111, the connecting assembly 15 can still rotate in the first rotating direction R under the action of the external force to complete the folding, ensuring that the connecting assembly 15 maintains unidirectional rotation and avoids colliding with the user's hand.

For the stroller 10 according to the present application, since the connecting assembly 15 is driven by the first elastic member 1111 to rotate in the first rotating direction R, the connecting assembly 15 does not rotate upwards and then backwards, thereby allowing the connecting assembly 15 to avoid the user's hand, and preventing the connecting assembly 15 from automatically folding during the folding process of the stroller 10, which could lead to a collision with the user's hand and causes discomfort or even injury to the operator.

Referring to FIG. 1, in some embodiments, when the pivot joint mechanism 14 is in the unfolded state, a height of the operating member 161 is smaller than that of the rotating base 120. When the locking joint 162 slides along the seat tube 17, the locking joint 162 can drive the first connecting base 110, via the linkage tube 18, to rotate relative to the second connecting base 130 in a direction opposite to the first rotating direction, thereby facilitating the handle frame 13 and the front leg frame 11 to be folded towards each other.

The folding process of the stroller 10 according to the illustrated embodiment is briefly described below with reference to FIG. 1 and FIG. 2. When the stroller 10 is in the unfolded state, the user operates the operating member 161, for example, by pulling the lifting portion 1610 upwards, to drive the locking joint 162 to be unlocked from the seat tube 17. The user continues to operate the lifting portion 1610 to drive the stroller frame locking mechanism 16 to slide along the seat tube 17, which, in turn, pulls the first connecting base 110, via the linkage tube 18, to be pivotally folded relative to the second connecting base 130, allowing the pivot joint mechanism 14 to gradually switch from the unfolded state to the folded state. During the switching process of the pivot j oint mechanism 14, the second connecting base 130 is rotated to cause the second inclined surface 1311 to gradually push the moving member 151 to move towards the rotating base 120, and the moving member 151, in turn, pushes the locking member 152 to move towards the rotating base 120, until the locking member 152 is disengaged from the first locking groove 1122 of the first connecting base 110 and completely enters the second locking groove 122, so that the locking member 152 is in the unlocking position, thereby unlocking the rotating base 120 from the pivot joint mechanism 14. The driving member 111 of the pivot joint mechanism 14 pushes against the driven portion 121 of the rotating base 120 during the rotation process, so that the rotating base 120 is rotated relative to the pivot joint mechanism 14 in the first rotating direction R and then drives the connecting assembly 15 connected to the rotating base 120 to rotate in the first rotating direction R, achieving the rotation and folding of the connecting assembly 15 in the first rotating direction R during the folding of the stroller frame.

The unfolding process of the stroller 10 according to the illustrated embodiment is briefly described below with reference to FIG. 1 and FIG. 2. In the unfolding process of the stroller frame, the pivot joint mechanism 14 switches from the folded state to the unfolded state. The second connecting base 120 is rotated relative to the first connecting base 110 until the extended portion 1512 faces the second inclined surface 1311. In this case, the user only needs to lift the connecting assembly 15 slightly or shaking the stroller frame to align the second locking groove 122 with the first locking groove 1122, so that the locking member 152 is driven by the second elastic member 141 to enter the first locking groove 1122 again, and then the rotating base 120 is blocked by the locking member 152 from rotating relative to the first connecting base 110, thereby re-locking the rotating base 120. In the process of the locking member 152 moving towards the first locking groove 1122, the moving member 151 is pushed to move towards the second connecting base 130 to cause the first inclined surface 15120 to fit the second inclined surface 1311 again.

## Claims

1. A folding device (100), comprising:
a pivot joint mechanism (14) provided with a driving member (111) and switchable between an unfolded state and a folded state;
a rotating base (120) pivotally connected to the pivot joint mechanism and configured to be connected to a connecting assembly (15), the rotating base being provided with a driven portion (121); and
a locking assembly (150) movably connected to at least one of the pivot joint mechanism and the rotating base, the locking assembly having a locking position in which the locking assembly restricts the rotating base and the pivot joint mechanism from rotating relative to each other and an unlocking position in which the locking assembly allows the rotating base and the pivot joint mechanism to rotate relative to each other;
wherein when the pivot joint mechanism switches from the unfolded state to the folded state, the pivot joint mechanism drives the locking assembly to move from the locking position to the unlocking position, and when the locking assembly is in the unlocking position, the driving member drives the driven portion to move to cause the rotating base to rotate relative to the pivot joint mechanism in a first rotating direction.

2. The folding device according to claim 1, wherein a moving stroke of the driven portion is larger than that of the driving member.

3. The folding device according to claim 1 or 2, wherein the pivot joint mechanism is provided with a first limiting groove (1127), the driving member is slidable along the first limiting groove, and the first limiting groove is configured to limit the moving stroke of the driving member.

4. The folding device according to claim 3, wherein a side of the pivot joint mechanism facing the rotating base is provided with a second limiting groove (1123), the driven portion is received in the second limiting groove and movable along the second limiting groove, and a length of the second limiting groove is greater than that of the first limiting groove;
optionally, the driven portion protrudes from a surface of the rotating base facing the pivot joint mechanism into the second limiting groove;
optionally, the first limiting groove and the second limiting groove are each a circular arc-shaped groove coaxial with a pivot axis of the rotating base and the pivot joint mechanism.

5. The folding device according to claim 4, wherein both the driving member and the driven portion are received in the second limiting groove, and the first limiting groove is provided in a wall surface of the second limiting groove.

6. The folding device according to any one of claims 1 to 5, wherein the driving member comprises a first elastic member (1111) and a driving block (1112), and the driving block is located between the first elastic member and the driven portion;
when the locking assembly is in the locking position, the driving block is connected to the driven portion, and an elastic force of the first elastic member provides the rotating base with a movement tendency to rotate in the first rotating direction.

7. The folding device according to claim 6, wherein the pivot joint mechanism is provided with a first connecting base (110) and a second connecting base (130) pivotally connected to each other, the first connecting base is pivotally connected to the rotating base, and a first limiting groove (1127) and a second limiting groove (1123) are provided on a side of the first connecting base facing the rotating base;
wherein the driving block is slidable along the first limiting groove, the first limiting groove is configured to limit a moving stroke of the driving member, one end of the first elastic member is connected to one end of the second limiting groove, the other end of the first elastic member is connected to the driving block, and the first elastic member, the driving block, and the driven portion are located in the second limiting groove.

8. The folding device according to any one of claims 1 to 7, wherein the pivot joint mechanism comprises a first connecting base (110) and a second connecting base (130) pivotally connected to each other; the rotating base is connected to the first connecting base; the locking assembly is located between the first connecting base and the rotating base; and in the process of the pivot joint mechanism switching from the unfolded state to the folded state, the pivot joint mechanism drives the locking assembly to move from the locking position to the unlocking position.

9. The folding device according to claim 8, wherein the locking assembly comprises a locking member (152) and a moving member (151); and in the process of the pivot joint mechanism switching from the unfolded state to the folded state, the pivot joint mechanism drives the moving member to move, and the moving member drives the locking member to move from the locking position to the unlocking position.

10. The folding device according to claim 9, wherein the first connecting base is provided with a first locking groove (1122); the rotating base is provided with a second locking groove (122); when the locking member is in the locking position, a part of the locking member is located in the first locking groove, and another part of the locking member is located in the second locking groove; and when the locking member is in the unlocking position, the locking member is located in either the first locking groove or the second locking groove.

11. The folding device according to claim 10, wherein the moving member is located in the first locking groove and abuts against the second connecting base; and in the process of the pivot joint mechanism switching from the unfolded state to the folded state, the second connecting base pushes the moving member to move towards the rotating base, and the moving member drives the locking member to move out of the first locking groove and move into the second locking groove;
optionally, one of an inner wall of the first locking groove and the moving member is provided with a limiting rib (115), the other of the inner wall of the first locking groove and the moving member is provided with a recess (1511), and the limiting rib and the recess are slidably fitted with each other;
optionally, the folding device further comprises a second elastic member (141) provided between the rotating base and the locking member, both ends of the second elastic member are connected to the rotating base and the locking member, respectively, and the second elastic member exerts a force onto the locking member in a direction away from the rotating base.

12. The folding device according to claim 11, wherein the first connecting base is provided with a perforation (1128); the moving member is provided with an extended portion (1512) fitting into the perforation and extending towards the second connecting base; an end of the extended portion proximate to the second connecting base is provided with a first inclined surface (15120); a side of the second connecting base facing the rotating base is provided with a second inclined surface (1311); and in the process of the pivot joint mechanism switching from the unfolded state to the folded state, the second connecting base pushes the moving member to move towards the rotating base through abutting fit between the second inclined surface and the first inclined surface.

13. A stroller (10), comprising:
a foldable stroller frame;
a pivot joint mechanism (14) provided on the stroller frame and switchable between an unfolded state and a folded state;
a rotating base (120) pivotally connected to the pivot joint mechanism;
a connecting assembly (15) connected to the rotating base, at least a part of the connecting assembly forming a first plane; and
a stroller frame locking mechanism (16) connected to the stroller frame;
wherein the stroller frame locking mechanism is provided with an operating member (161); when the operating member is subjected to a force in a first direction, the operating member drives the pivot joint mechanism to switch from the unfolded state to the folded state; and in at least one stage of the switching process, the pivot joint mechanism drives the connecting assembly to rotate relative to the pivot joint mechanism in a first rotating direction, such that an angle formed between the first plane and the first direction is gradually increased.

14. The stroller according to claim 13, wherein the process of the connecting assembly rotating in the first rotating direction comprises a first stage and a second stage; and in the first stage, the connecting assembly is driven by the driving member to rotate in the first rotating direction, and in the second stage, the connecting assembly continues to rotate in the first rotating direction under an action of an external force.

15. The stroller according to claim 13 or 14, wherein when the pivot joint mechanism is in the unfolded state, a height of the operating member is lower than that of the rotating base.
